# EUROPÄISCHE PATENTSCHRIFT

(11) **EP 0 367 749 B1**
(45) Veröffentlichungstag und Bekanntmachung des Hinweises auf die Patenterteilung: **23.03.1994**
(21) Anmeldenummer: 89890222.6
(22) Anmeldetag: 31.08.1989
(51) Int. Cl.: B29C 47/14

(54) **Spritzanordnung**
Injection arrangement
Dispositif d'extrusion

(30) Priorität: 05.10.1988 AT 2452/88
(43) Veröffentlichungstag der Anmeldung: 09.05.1990
(73) Patentinhaber: Semperit Reifen Aktiengesellschaft, A-2514 Traiskirchen (AT)
(72) Erfinder: Beckmann, Otto, Dr., AT-Kapellengasse 5/1/5/21 (AT)
(74) Vertreter: Vinazzer, Edith

(56) Entgegenhaltungen:
- EP-A- 0 048 819
- WO-A-86/07006
- BE-A- 511 763
- DE-A- 3 212 157
- FR-A- 994 882
- FR-A- 2 207 014
- FR-A- 2 416 105
- GB-A- 941 764
- JP-A-52 040 663
- US-A- 3 255 488
- US-A- 4 189 293
- US-A- 4 285 651
- PATENT ABSTRACTS OF JAPAN, Band 6, Nr. 204 (M-164)[1082], 15. Oktober 1982;& JP-A-57 110 422 (SEIKISUI KASEIHIN KOGYO K.K.) 09-07-1982

## Beschreibung

Die Erfindung betrifft eine Spritzanordnung zum Formen von Profilen, insbesondere von Profilen mit langgestrecktem Querschnitt aus Kautschukmischungen oder Kunststoffen, mit einem Einschneckenextruder, einem Spritzkopf, einer Spritzleiste und gegebenenfalls einem zwischen Extruder und Spritzkopf zwischengeschalteten Aggregat, wobei der Spritzkopf einen äußeren Spritzkopfmantel, einen inneren Spritzkopfmantel und einen den Übergangsbereich zwischen innerem und äußerem Spritzkopfmantel bildenen Keil aufweist, wobei das Spritzgut im Spritzkopf vorerst in Schlauchform vorliegt und der Keil eine Längsspaltung des schlauchförmigen Spritzgutes bewirkt, welches anschließend im Spritzkopf aufgerollt wird.

Das Formen von Materialien zu Profilen erfolgt in der industriellen Praxis sehr häufig mittels eines Spritzvorganges. Hierbei können so unterschiedliche Materialien wie Teigmassen, kosmetische Pasten, Lehm, Kunststoffe, insbesondere auch Kautschukmischungen, durch Extrusion geformt werden.

Bei einem Einschneckenextruder wird das zu formende Material über eine einzige Förderschnecke gegebenenfalls unter Zwischenschaltung eines Aggregates an das eigentlich formende Werkzeug, die Spritzleiste, gebracht. Der Spritzkopf stellt hierbei das Übergangsstück zwischen der Extruderschnecke bzw. dem Aggregat und der Spritzleiste dar. Es wird nun zwischen Rundspritzköpfen und Flachspritzköpfen unterschieden, wobei in der Regel für gedrungene Profile Rundspritzköpfe, für langgestreckte Flachspritzköpfe verwendet werden.

Bei der Reifenfertigung hat das Spritzen von Kautschukmischungen mittels Flachspritzköpfen große Bedeutung. Obwohl die Extrusion von Kautschukmischungen in der Reifenindustrie eine weit verbreitete Praxis darstellt, bleiben oft genug Wünsche nach höherer Profilqualität und/oder höherer Produktivität offen. Dies liegt zum Teil am Spritzgut selbst, - viskoelastische, hochviskose Materialien sind schwierig zu verarbeiten -, zum Teil aber auch an den herkömmlichen Extrudern.

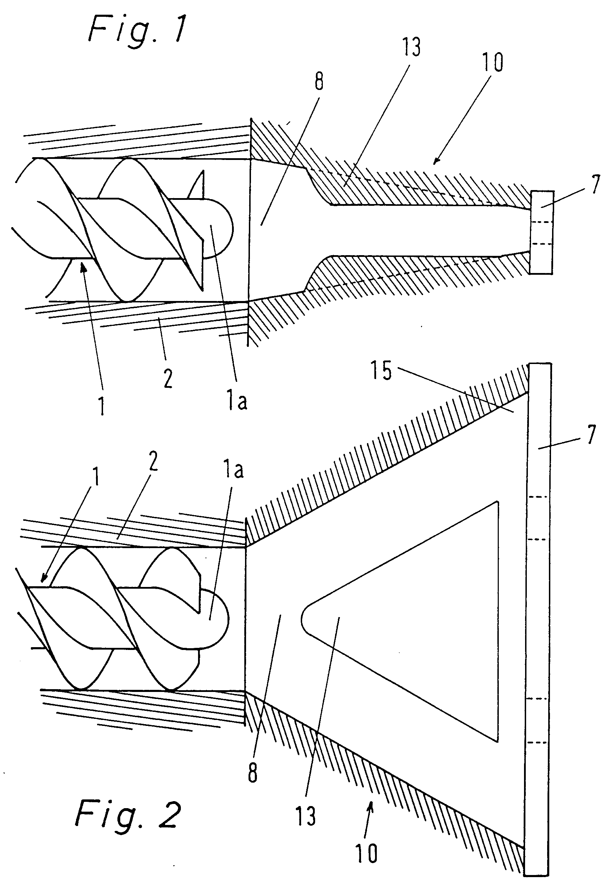

Zum bekannten Stand der Technik wird beispielsweise auf Fig. 1 und 2 verwiesen, wo eine gängige Spritzanordnung zur Fertigung von Profilen für Fahrzeugluftreifen, jeweils in Seitenansicht und in Draufsicht, teilweise im Schnitt, skizziert ist. Auf Einzelheiten, wie das Anspeisen des Extruders, die Materialaufnahme durch die Schnecke etc. wird hier nicht eingegangen. Erwähnt sei aber, daß an den Spritzvorgang ein Kühlprozeß in bekannter Weise nachfolgt. Ein Einschneckenextruder, wie er in den Fig. 1 und 2 dargestellt ist, weist im wesentlichen eine Schnecke 1, einen Spritzkopf 10 und eine Flachspritzleiste 7 auf.

Beim Formen von viskoelastischen Materialien wird nach dem Entlasten, dem Verlassen der Spritzleiste 7, die durch Spritzkopf 10 und Spritzleiste 7 aufgezwungene Form nicht exakt beibehalten, es erfolgt eine teilweise Rückstellung auf die vormaligen Geometrieverhältnisse. Gemäß den Zeichnungsfiguren bedingt die Spritzleiste 7 ein Verengen des Materialflusses, nach dem Verlassen der Spritzleiste 7 vergrößert sich der Querschnitt des Profiles, welcher Effekt als Spritzquellung bezeichnet wird. Die Spritzquellung ist nicht nur vom Spritzvorgang selbst, sondern auch vom Spritzmaterial abhängig. Selbst bei gegebener Spritzmaschine und gegebenem Spritzgut ist die Spritzquellung keine konstante Größe, sondern kann aufgrund wechselnder Rohstoffeigenschaften und wechselnder Betriebsparameter, etwa wie Lagerzeit der Rohmischung, schwanken. Insbesondere ist die Spritzquellung auch von der Anströmgeschwindigkeit des Spritzgutes und dessen Temperatur abhängig. Bei herkömmlichen Spritzanordnungen sind nun diese beiden Größen im Spritzleistenbereich nicht konstant, sondern variieren über den Querschnitt der Spritzleiste.

Die Spritzquellung sowie das Schwanken derselben kann zum Teil durch das Aufbringen einer Abzugsspannung am Profil ausgeglichen werden. Damit kann zwar die Geometrie des Profiles im wesentlichen konstant gehalten werden, doch werden schwankende Längsspannungen im Profil damit in Kauf genommen, was etwa bei Laufstreifenprofilen zu einer Minderung der Reifengleichförmigkeit führen kann.

Weitere Probleme ergeben sich bei herkömmlichen Extrudern im Zusammenhang mit den im Bereich der Schnecke 1 und des Spritzkopfes 10 stattfindenden Fließvorgängen des Spritzgutes. In den Schneckengängen wird nämlich das Spritzgut nicht nur in longitudinaler Richtung befördert, sondern es erfährt auch eine transversale schraubende Bewegung, wobei insbesondere am Boden der Schnecke 1 und an den Schneckenflügeln das Spritzgut durch Reibung heiß wird. Das Spritzgut in diesen heißen Randzonen ist nun, da mit steigender Temperatur die Viskosität von Kautschukmischungen rasch abnimmt, besonders fließfreudig. Dem steht ein vergleichsweise wenig fließendes Material im Bereich der verhältnißmäßig kühlen Schneckengänge zwischen den Schneckenflügeln gegenüber. Beim Abfließen des Spritzgutes vom Schneckenende 1a in den mittigen Bereich 8 des Spritzkopfes 10 steht nun einem "heißen Kern" im Mittelbereich des Spritzkopfes 10 kühleres Material an den Wandungen desselben gegenüber. Diese Temperaturverteilung ist nun aus mehreren Gründen äußert ungünstig. So setzt sich der "heiße Kern" im Spritzkopf 10 bis in den Mittelteil des Profiles fort und erschwert den anschließenden Kühlprozeß. Zugleich wird in den heißen Mischungsbereichen das Bilden von Poren gefördert, da die Löslichkeit von Gasen in rußgefüllten Kautschukmischungen mit steigender Temperatur abnimmt. Der relativ kalte Materialbereich im Spritzgut, welcher am Spritzkopf 10 und der Spritzleiste 7 vorliegt, erschwert das Ausformen des Profiles. Der "heiße Kern" an Material im Spritzkopf 10 fließt rascher als die umgebenden Mischungsbereiche, wobei noch zusätzlich hinzukommt, daß diese ungleichmäßige Fließgeschwindigkeit durch die kürzeren Fließwege im Mittelbereich des Spritzkopfes 10 verschärft wird. Die solcherart entstandenen Profile neigen in der Mitte dazu, Wellen zu bilden, was durch das Aufbringen einer zusätzlichen Abziehspannung ausgeglichen werden kann. In den Profilausläufen treten dann jedoch zusätzliche Längsspannungen auf, die zum Einreissen, im Extremfall zum Abreissen der Profile führen können.

Bei im Querschnitt asymmetrischen Profilen, etwa bei keilförmigen Profilen, kommt dann zusätzlich hinzu, daß auch die von der Abziehspannung herrührenden und im Profil verbleibenden Längsspannungen asymmetrisch sind. Es kann dann der Effekt der "Säbelbildung" eintreten, daß heißt, die abgelängten Profile sind in Längsrichtung gesehen nicht mehr gerade sondern gekrümmt.

Um die Querschnittsabhängigkeit des Fließverhaltens im Spritzkopf 10 zu mindern, ist es etwa bei Flachspritzköpfen, wie in Fig. 1 dargestellt, üblich, den Querschnitt im mittigen Bereich durch eine Drossel 13 drastisch zu verengen, um hier bremsend zu wirken. Zum Stand der Technik gehört es auch, vor allem bei kaltangefütterten Extrudern, zur Vergleichmäßigung der Spritztemperatur Stiftzylinder zu verwenden. Soll der Durchsatz jedoch gleich bleiben, verlangen diese Maßnahmen eine höhere Spritzenergie und führen auch zu erhöhten Spritztemperaturen.

Durch den sogenannten roller nose Extruder ist eine konstruktiv aufwendige Möglichkeit geschaffen worden, die Fließvorgänge zu vergleichmäßigen. Hiebei setzt am Ausgang des Spritzkopfes ein rotierender Zylinder an, der nicht nur die Fließgeschwindigkeit und die Temperatur des Spritzgutes vergleichmäßigt, sondern auch das Profil auf einer Seite ausformt. Dieser Extrudertyp ist daher vor allem für solche Profile geeignet, die eine große und ebene Begrenzungsfläche aufweisen sollen. Das eigentlich formende Werkzeug ist jedoch auch hier die Spritzleiste, die halboffen ausgelegt ist und zum Zylinder angepreßt wird.

Beim Abfließen des Spritzgutes von der Schnecke 1 in den mittigen Bereich 8 des Spritzkopfes 10 werden weiters die von der Schnecke 1 herrührenden Rotationsbewegungen auf das Spritzgut im Spritzkopf 10 übertragen. Das zerstört die Links-rechts-Symmetrie des Spritzvorganges und erfordert die Verwendung von asymmetrischen Spritzleisten zur Fertigung symmetrischer Profile. Ein Verlängern des Spritzkopfes 10 kann diesen Nachteil verhindern, ist jedoch mit einer Minderung der Spritzleistung und/oder einem Ansteigen der Spritztemperatur verbunden.

Beim Abfließen des Spritzgutes vom Schneckenende 1a in den Spritzkopf 10 werden die Mischungsbestandteile, die voher an der Schnecke 1 anlagen, gegeneinander gepreßt und spiralig verformt. Dadurch bilden sich im Spritzkopf spiralige Verschweißungsflächen die die Verschweißbeständigkeit des entstehenden Profiles verschlechtern und die Porenbildung fördern, was die Geometrie des entstehenden Profiles stört.

Um diese Porenbildung zu unterdrücken, können den Extruderschnecken rotierende oder auch statische Mischaggregate nachgeschaltet werden. Derartige Maßnahmen verlangen aber, soll der Durchsatz gleich bleiben, erhöhte Spritzenergie und führen außerdem zu einem empfindlichen Ansteigen der Spritztemperaturen.

Beim Extrudieren von Kautschukmischungen kann bei Extrudern herkömmlicher Bauart ein partielles Anvulkanisieren des Spritzgutes auftreten. Ganz bewußt wird ein Anvulkanisieren etwa bei der Scherkopfextrusion zur kontinuierlichen Vulkanisation von Profilen genutzt. Bei der Reifenfertigung ist ein derartiges Anvulkanisieren des Spritzgutes jedoch unerwünscht, insbesondere deshalb, weil anvulkanisierte Materialien an Konfektionsklebrigkeit einbüßen. Zudem sind anvulkanisierte Profile aufgrund der geänderten Spritzquellung meist außerhalb der Geometrietoleranz.

Ausgangspunkte partieller Anvulkanisation sind oft die nur langsam durchströmten "toten Winkel" 15 im Bereich der Flanken des Spritzkopfes 10. Hier können der Spritzleiste 7 vorgesetzte Schablonen eine Minderung der Anvulkanisation bewirken.

Bei der Reifenfertigung hat sich durch das Aufkommen von Mehrfachspritzköpfen, die beispielsweise doublierte oder triplierte Profile liefern, der Aufbau von Reifen vereinfacht. Die genannten und angeführten Probleme und Schwierigkeiten haben sich jedoch teilweise verstärkt. Insbesondere macht es das Doublieren der Profile nun unmöglich, die einzelnen Profile durch das Aufbringen von Abzugsspannungen zu korrigieren, da nur das schon doublierte Profil gespannt werden kann. Dies bedingt in der Praxis oft zeitraubende Einstellarbeiten an den Spritzleisten, wodurch große Mengen von nicht homogenen Rücklaufmaterial entstehen, was schließlich leicht zu Schwankungen in der Spritzquellung und der Profilqualität führen kann.

Aus der US-A 4,189,293 ist ein Spritzkopf bekannt, bei dem das von der Extruderschnecke kommende Spritzgut als Strang mit etwa kreisförmigem Querschnitt in den Eingangsbereich des Spritzkopfes, der entsprechend geformt ist, eintritt. Mittels eines Dornes wird der Spritzgutstrang zu einem Schlauch geformt, der anschließend geteilt wird und über einen entsprechend geformten Innenraum im Spritzkopf bis zur Spritzleiste aufgebreitet wird. Auch bei diesem bekannten Spritzkopf treten, insbesondere bedingt durch die Strangform des Spritzgutes, die bereits beschriebenen Probleme im Übergangsbereich Extruderschnecke zu Spritzkopf auf, insbesondere was die Temperaturverteilung des von der Extruderschnecke kommenden Spritzgutes betrifft. Durch das Zusammenfließen von Materialsträngen am Schneckenende entstehen ferner sogenannte Dublierzonen, die Schwachstellen bilden, da dort bevorzugt Poren entstehen, die die Maßhaltigkeit des entstehenden Profiles nachhaltig stören. Um die im Bereich der Dornspitze stattfindende Verformung eines Stranges in ein schlauchartiges Gebilde bewerkstelligen zu können ist ein hoher Energieaufwand, insbesondere ein hoher Druck erforderlich. Das Spritzgut wird heiß und anfällig für das Entstehen von Poren.

Die Erfindung hat sich nun die Aufgabe gestellt, eine Spritzanordnung der eingangs genannten Art derart zu gestalten, daß die genannten Nachteile bzw. Schwierigkeiten der herkömmlichen Spritzanordnungen nicht mehr bzw. in einem wesentlich geringeren Ausmaß auftreten. Es soll demnach eine Spritzanordnung geschaffen werden, mit der, unter Setzung von konstruktiv einfachen Maßnahmen, bei vergleichsweise geringem Energieaufwand und hohem Durchfluß hochwertige Profile von gleichmäßiger Qualität herstellbar sind.

Gelöst wird die gestellte Aufgabe erfindungsgemäß dadurch, daß der innere Spritzkopfmantel mit der Extruderschnecke oder dem Aggregat direkt verbunden ist, wobei der Extruder bzw. das Aggregat und der Spritzkopf miteinander fluchtende und gleichdimensionierte Innenraumbereiche mit schlauchförmigem Querschnitt aufweisen.

Durch die Erfindung können zwei der die meisten Probleme verursachenden Schwächen von herkömmlichen Spritzanordnungen beseitigt werden. Erstens wird nun das Spritzgut nicht mehr unmittelbar in den mittigen Bereich des Spritzkopfes entlassen, sondern vorerst als Schlauch weitergeführt; zweitens sind durch den anschließenden Weitertransport des Spritzgutes bis zur Spritzleiste über die gesamte Breite des Spritzkopfes im wesentlichen gleichlange Fließwege gegeben. Das vorerst schlauchförmige Weiterführen des Spritzgutes im Spritzkopf hat nun insbesondere den Vorteil, daß das in den Spritzkopf entlassene Spritzgut eine wesentlich günstigere Temperaturverteilung aufweist als bei herkömmlichen Konstruktionen. So bleibt nämlich der während des Transportes durch die Schnecke entstehende Zustand - relativ heiße Mischung im Bereich der Wandungen, relativ kühle Mischung dazwischen - erhalten und er setzt sich auch während des Weitertransportes im Spritzkopf bis zur Spritzleiste und ins Profil fort. Dadurch kann nicht nur die Spritzenergie geringer gehalten werden, sondern es wird auch die Spritzleiste wesentlich gleichmäßiger angeströmt. Das Profil kann daher auch leichter ausgeformt werden und ist vergleichsweise wenig verspannt.
Auch läßt sich das Profil leichter und rascher abkühlen. Die durch die Erfindung nun im Spritzkopf vorliegenden gleich langen bzw. im wesentlichen gleich langen Fließwege wirken sich ebenfalls besonders günstig auf die erforderliche Spritzenergie aus. Auch diese Maßnahme trägt zu einem weiteren Herabsetzen der Verspannung der entstehenden Profile bei und wirkt sich besonders günstig auf die Maßhaltigkeit und die Gleichmäßigkeit der entstehenden Profile aus. In diesem Zusammenhang ist auch wesentlich, daß durch den erfindungsgemäßen Transport des Spritzgutes im Spritzkopf Rotations- und Pulsationsbewegungen im Spritzgut weitgehend abgebremst werden.

Der gemäß der Erfindung gestaltete Spritzkopf weist einen äußeren Spritzkopfmantel, einen inneren Spritzkopfmantel und einen Keil auf, der die Längsspaltung des Spritzgutes bewirkt und einen Übergangsbereich zwischen innerem und äußeren Spritzkopfmantel darstellt. Der Keil bewirkt die Längsspaltung des Spritzgutes und bremst somit etwaige von der Schnecke herrührende Rotationsbewegungen im Spritzgut. Wie schon erwähnt, bleibt die während des Transportes durch die Schnecke entstehende Temperaturverteilung im Spritzgut im Spritzkopf erhalten, da beispielsweise das vorerst im Bereich des inneren Spritzkopfmantels transportierte Spritzgut nach der Längsspaltung des gebildeten Schlauches durch den Keil schließlich zum äußeren Spritzkopfmantel transportiert wird. Dadurch wird auch die Gefahr einer Porenbildung entschärft.

Gemäß einer bevorzugten Ausführungsform weist der einen schlauchartigen Querschnitt aufweisende Innenraumbereich des Spritzkopfes über seine gesamte Länge eine konstante bzw. im wesentlichen konstante Innenbreite auf, wobei auch der aufrollende Innenraum diese Breite über seinen gesamten Bereich aufweist. Bei einer zweiten Ausführungsvariante weist der einen schlauchartigen Querschnitt aufweisende Innenraumbereich des Spritzkopfes eine sich in Richtung Spritzleiste verjüngende Kegelstumpfform auf , wobei in Richtung Spritzleiste die Wandstärke bzw. Breite des aufrollenden Innenraumbereiches kontinuierlich zunimmt. Im Übergangshereich vom Spritzkopf zur Spritzleiste wird dadurch ein strömungstechnisch günstiger stumpfer Winkel geschaffen, der der ansonsten an dieser Stelle bestehenden Neigung zur unkontrollierten Anvulkanisation besonders entgegenwirkt.

Weitere Ausgestaltungen der Erfindung betreffen die Schnecke bzw. deren Ummantelung. Wird das Spritzgut von der Schnecke auf den inneren Spritzkopfmantel weitergeführt, ist es beispielsweise möglich, die Schnecke am inneren Spritzkopfmantel drehbar zu lagern. Bei einer anderen Ausführungsvariante ist vorgesehen, die Schnecke fest mit dem inneren Spritzkopfmantel zu verbinden, wobei dann der Schneckenmantel am äußeren Spritzkopfmantel drehbar gelagert ist.

Bei diesen Ausführungsvarianten ist es möglich, zur Temperierung der Schnecke einen den inneren Spritzkopfmantel durchsetzenden Kanal vorzusehen.

Bei einer weiteren Ausführungsform werden die Schneckenflügel derart gestaltet, daß ihre Höhe, insbesondere kontinuierlich, in Richtung Spritzkopf zu abnimmt. Dadurch wird das von der Schnecke transportierte Mischungsmaterial, welches zunächst an den Flügelflanken anliegt, zum Schneckenkern gelenkt. Derart kann zusätzlich das Entstehen von Verschweißungsflächen und das Ausbilden von Poren hintangehalten werden.

Um einem Druckabfall zum Schneckenende zu entgegenzuwirken, ist es dabei günstig, wenn gleichzeitig der Durchmesser des Schneckenkernes zum Schneckenende zu bzw. zum Spritzkopf zu kontinuierlich zunimmt.

Um den Spritzkopf einer eventuellen Reinigung leicht zugänglich zu machen, ist es von Vorteil, wenn der äußere Spritzkopfmantel aus mehreren Teilen besteht, von welchen zumindest einer von der Spritzanordnung abgehoben werden kann. Bei der Spritzanordnung gemäß der Erfindung kann, wie es auch bei herkömmlichen Spritzanordnungen der Fall ist, zwischen der Förderschnecke und dem Spritzkopf ein Aggregat zwischengeschaltet werden. Besonders vorteilhaft ist hiebei eine Anordnung, bei der zwischen der Schnecke und dem Spritzkopf ein mit der Schnecke mitrotierendes Aggregat, insbesondere ein Mischaggregat oder ein Scherkopf, vorgesehen ist. Dieses Aggregat kann am inneren Spritzkopfmantel drehbar gelagert werden. Ist das nicht der Fall, kann der Spritzkopf von der übrigen Spritzanordnung komplett entfernt werden, was für die Reinigung desselben besonders günstig ist.

Auch Spritzanordnungen unter Verwendung eines statischen Aggregates, insbesondere eines Mischaggregates, können erfindungsgemäß ausgeführt werden. Erfolgt keine Lagerung des Aggregates am Spritzkopf, so verbleibt zwischen dem Aggregat bzw. dem Scherkopf und dem Spritzkopf ein Spalt. Um nun das hier etwaig anvulkanisierende Mischungsmaterial nach außen abzuführen, kann im inneren Spritzkopfmantel ein entsprechender Kanal vorgesehen werden.

Besonders vorteilhaft ist die Verwendung von erfindungsgemäßen Spritzanordnungen bei Mehrfachspritzanlagen, beispielsweise bei Doublieranlagen, wie sie zur Herstellung von Profilen für Fahrzeugluftreifen verwendet werden, da hier die Vorteile, die sich aus den gleichlangen Fließwegen ergeben, voll zum Tragen kommen können. Bei einer Doublieranlage können hiebei günstigerweise die beiden inneren Spritzkopfmäntel einteilig ausgeführt werden.
Auch bei roller nose-Extrudern lassen sich erfindungsgemäße Spritzanordnungen vorteilhaft einsetzen.

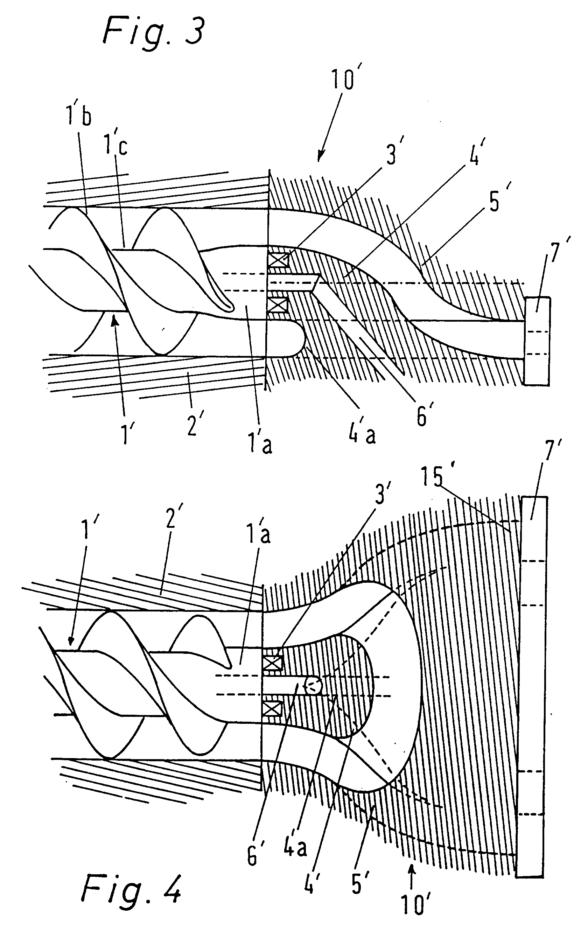

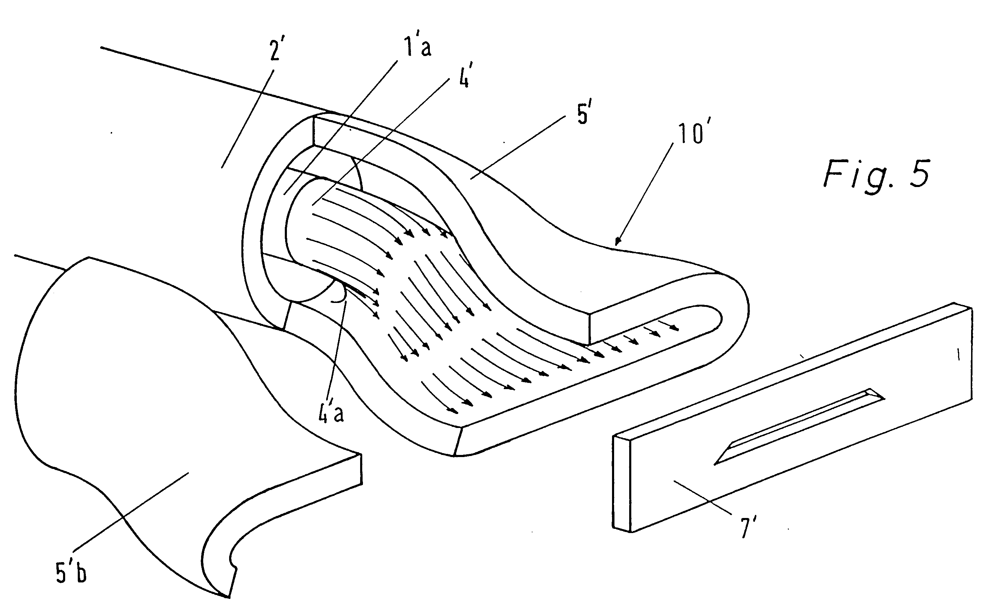

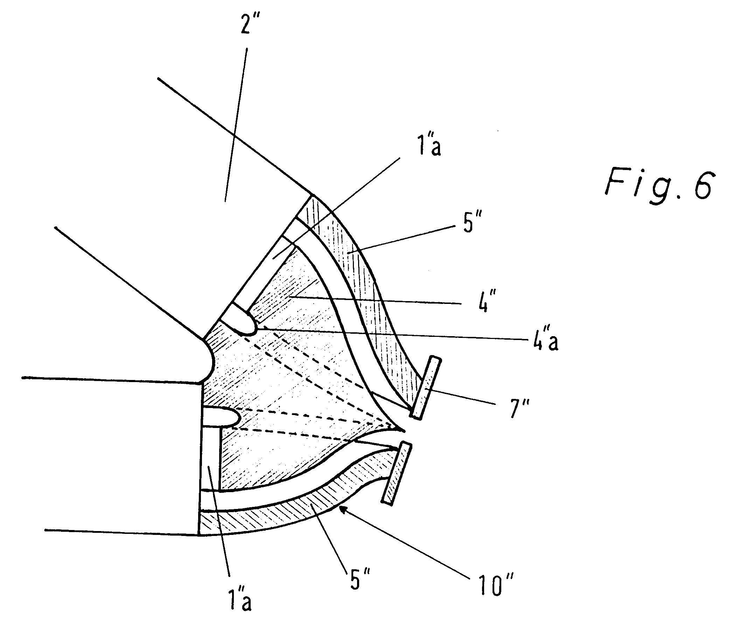

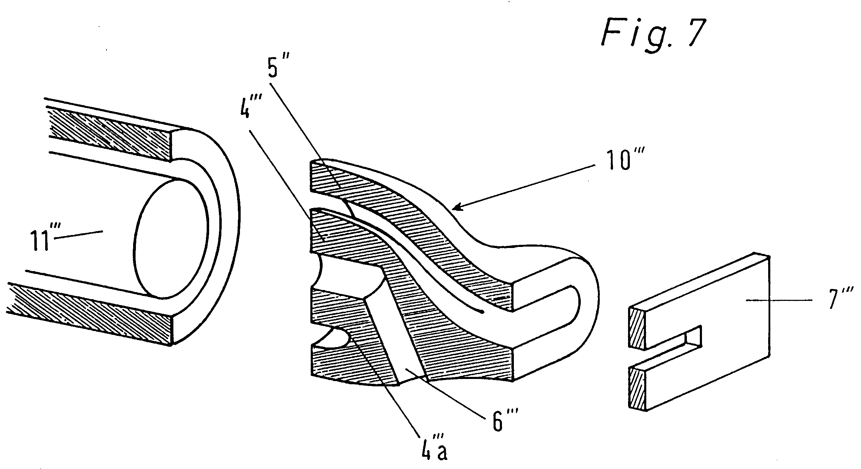

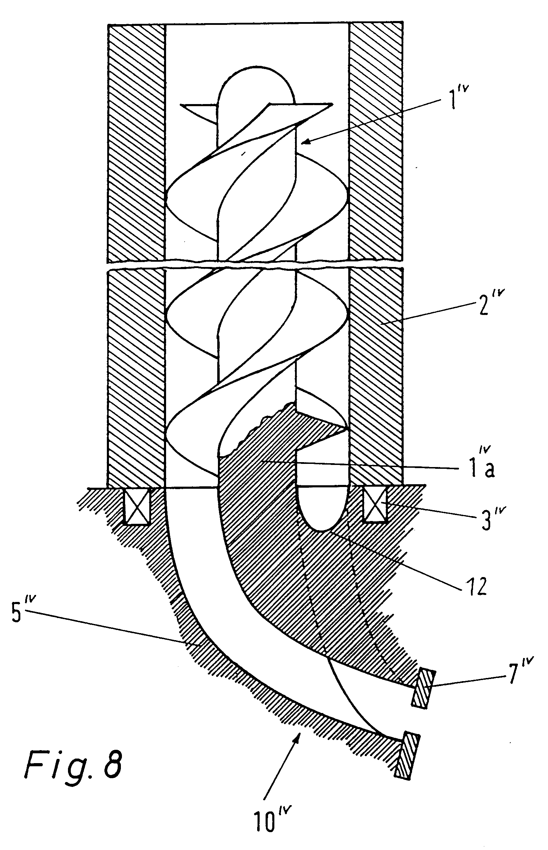

Weitere Merkmale, Vorteile und Einzelheiten der Erfindung werden nun anhand der Zeichnung, die mehrere Ausführungsbeispiele der erfindungsgemäßen Spritzanordnung schematisch darstellt, näher beschrieben. Hiebei ist in den Zeichnungsfiguren 3 und 4 jeweils eine Seitenansicht und eine Draufsicht auf eine Ausführungsvariante, teilweise im Schnitt, dargestellt. Fig. 5 zeigt einen Schrägriß des Spritzkopfbereiches gemäß der Figuren 3 und 4. Fig.6 zeigt eine Douplexanlage mit erfindungsgemäßen Spritzanordnungen in Seitenansicht, teilweise im Schnitt. In Fig. 7 ist eine Ausführungsvariante unter Verwendung eines Scherkopfextruders im Schrägriß und geschnitten dargestellt. Fig. 8 zeigt ein weiteres Ausführungsbeispiel einer Spritzanordnung gemäß der Erfindung in Seitenansicht, teilweise im Schnitt. Die Figuren 1 und 2 zeigen eine gemäß des Standes der Technik ausgeführte Spritzanordnung, auf die weiter oben schon ausführlich eingegangen wurde.

Die Figuren 3, 4 und 5 zeigen anhand eines ersten Ausführungsbeispieles besonders deutlich die vorliegende Erfindung. Der erfindungsgemäß gestaltete Spritzkopf 10′ besteht im wesentlichen aus einem äußeren Spritzkopfmantel 5′, einem inneren Spritzkopfmantel 4′ und einem Keil 4′a. Eine innerhalb eines Schneckenmantels 2′ angeordnete Schnecke 1′ ist über ein Lager 3′ am inneren Spritzkopfmantel angesetzt. Zur Temperierung der Schnecke 1′ kann ein den inneren Spritzkopfmantel 4′ durchsetzender Kanal 6′ vorgesehen sein. Der innere Spritzkopfmantel 4′, der äußere Spritzkopfmantel 5′ und der Keil 4′a sind hinsichtlich ihrer Gestaltung derart aufeinander abgestimmt, daß das von der Schnecke 1′ abfließende Spritzgut zunächst zu einem Schlauch geformt wird, der in der Folge vom Keil 4′a der Länge nach gespalten wird. Anschließend erfolgt ein Entrollen des gespaltenen Schlauches bzw. kontinuierliches Aufbreiten des Spritzgutes bis zur Spritzleiste 7′. Die Schrägrißdarstellung in Fig. 5 macht dies besonders deutlich. Aus dieser Zeichnungsfigur ist auch ersichtlich, wie das vom Schneckenauslauf 1′a kommende Spritzgut, versinnbildlicht durch eine Pfeilschar, über den inneren Spritzkopfmantel 4′ fließt.

Wie aus den Figuren 3 und 4 ersichtlich ist, kann die Schnecke 1′ derart gestaltet werden, daß die Höhe der Schneckenflügel 1′b zum Schneckenende 1′a zu im wesentlichen kontinuierlich abnimmt. Gleichzeitig kann die Dicke des Schneckenkernes 1′c zum Schneckenende 1′a ebenfalls im wesentlichen kontinuierlich zunehmen. Eine Abnahme der Höhe der Schneckenflügel 1′b bewirkt, daß die von der Schnecke 1′ transportierte Mischung zum Schneckenende 1′a zu auf die Oberseite des Schneckenkernes 1′b bzw. zum Schneckenmantel 2′ gelenkt wird. Dadurch kann das Entstehen von Verschweißungsflächen weitgehend verhindert werden. Ebenso wird dadurch die Porenbildung im Vergleich zu herkömmlichen Spritzanordnungen vermindert und die Maßhaltigkeit und Verschleißbeständigkeit der entstehenden Profile verbessert.

Die in den Schneckengängen entstehende Temperaturverteilung in der Mischung - relativ heißer Randbereich, relativ kühler Kernbereich - bleibt durch die erfindungsgemäße Ausgestaltung des Spritzkopfes auch im Spritzkopf 10′, der Spritzleiste 7′ und somit im Profil erhalten. Daraus resultieren weitere Vorteile, wie geringe erforderliche Spritzenergie, sehr gleichmäßiges Ausströmen des Materials an der Spritzleiste 7′, leichtes Ausformen des Profiles, welches auch kaum verspannt ist und sich rascher abkühlen läßt als dies bei herkömmlichen Spritzanordnungen der Fall ist.

Wie aus Fig. 4 weiters ersichtlich ist, ist der in den seitlichen Übergangsbereichen 15′ vom Spritzkopf 10′ zur Spritzleiste 7′ gebildete Winkel größer als jener im vergleichbaren Bereich 15 des Standes der Technik gemäß Fig. 2. Im Bereich 15′ neigt daher das Spritzgut wesentlich weniger zum Anvulkanisieren als im entsprechenden Bereich 15 nach dem Stand der Technik. Die erfindungsgemäße Ausgestaltung des Spritzkopfes 10′ gestattet es weiters, die Spritzkopföffnung im Bereich der Spritzleiste 7′, bei vorgegebener Profilbreite, relativ schmal, insbesondere wesentlich schmäler auszuführen, als es bei herkömmlichen Spritzanordnungen möglich ist. Auch dadurch kann einer Anvulkanisation entgegengewirkt werden.

Durch die Lagerung der Schnecke 1′ am inneren Spritzkopfmantel 4′ ist es möglich, bei einem bestimmten Schneckendurchmesser betrachtet, den Durchmesser des Schneckenkernes kleiner zu wählen und dabei tiefergehende Schneckengänge zu schaffen, was die Förderleistung erhöht.

Um den Spritzkopf 10′ für eine routinemäßige Reinigung, beispielsweise bei einem Mischungswechsel, leicht zugänglich zu machen, kann, wie Fig. 5 zeigt, der äußere Spritzkopfmantel 5′ aus mehreren Teilen gestaltet werden, beispielsweise derart, daß zwei Teile abhebbar sind. Fig. 5 zeigt schematisch einen derart abgehobenen Teil 5′b.

Fig. 6 zeigt eine Douplexanlage, wie sie beispielsweise bei der Herstellung von Laufstreifen für Fahrzeugluftreifen verwendet wird. Die Anordnung der beiden gemäß der Erfindung ausgestalteten Spritzanordnungen ist so getroffen, daß die Längsachsen der Schnecken 1˝ miteinander einen spitzen Winkel einschließen. Die beiden Spritzköpfe 10˝ führen zu einer einzigen Spritzleiste 7˝. Beim dargestellten Ausführungsbeispiel sind die beiden inneren Spritzkopfmäntel 4˝ einteilig gestaltet, womit eine feste Verbindung der beiden Spritzanordnungen geschaffen ist. Analog zu Fig. 5 kann auch hier der äußere Spritzkopfmantel 5˝ abhebbare Teile aufweisen.

Fig. 7 zeigt schematisch eine Ausführungsvariante unter Verwendung eines Scherkopfextruders, wobei jeder Scherkopftyp eingesetzt werden kann. Bei einer derartigen Anordnung kann der Spritzkopf 10˝′ zur Gänze abgehoben werden, was für die Reinigung von Vorteil ist. Zwischen dem Scherkopf 11 und dem inneren Spritzkopfmantel 4˝′ kann ein Spalt von maximal ca. 1 mm verbleiben. Um das im Spalt zwischen dem Scherkopf 11 und dem inneren Spritzkopfmantel 4˝′ eventuell anvulkanisierende Mischungsmaterial abfließen zu lassen, ist im inneren Spritzkopfmantel 4˝′ ein nach außen führender Kanal 12 vorgesehen.

Während bei den Ausführungsbeispielen gemäß den Figuren 3 bis 6 das Spritzgut vorerst zu einem im wesentlichen zylindrischen Schlauch geformt wird, kann es bei der Scherkopfextrusion günstiger sein, das Spritzgut vorerst zu einem im wesentlichen sich kegelförmig verjüngenden Schlauch zu formen, der gespalten und entrollt wird, wobei während des Transportes in Richtung Spritzleiste 7˝′ die Materialstärke kontinuierlich zunimmt. Der geschilderte Materialfluß wird durch eine entsprechende Gestaltung des äußeren und des inneren Spritzkopfmantels 4˝′ und 5˝′ erreicht. Selbstverständlich ist bei der Dimensionierung dieser Bauteile darauf zu achten, daß das Spritzgut ungehindert fließen kann. Bei diesem Ausführungsbeispiel liegt im Übergangsbereich Spritzkopf 10˝′ zu Spritzleiste 7˝′ ein strömungstechnisch günstiger stumpfer Winkel vor, was der sonst an diesen Stellen bestehenden Neigung zur unkontrollierten Anvulkanisation entgegenwirkt. Es lassen sich nun auch flache Profile unter Verwendung eines Scherkopfextruders herstellen, was bisher eben wegen der ansonsten auftretenden unkontrollierbaren Anvulkanisation nicht möglich war.

Fig. 8 zeigt ein Ausführungsbeispiel mit einem senkrecht stehenden Extruder. Hiebei ist der Schneckenauslauf 1^{iv}a fest mit dem inneren Spritzkopfmantel 4^{iv} verbunden, die Schnecke 1^{iv} hat somit ihr freies Ende im Fütterungsbereich. Der Schneckenmantel 2^{iv} ist am äußeren Spritzkopfmantel 5^{iv} mittels Lager 3^{iv} drehbar gelagert. Eine derartige Anordnung bietet insbesondere beim Anfüttern von granuliertem Spritzgut den Vorteil einer guten Materialaufnahme.

Die Erfindung ist auf die dargestellten Ausführungsbeispiele nicht eingeschränkt. Insbesondere ist die gemäß der Erfindung ausgestaltete Spritzanordnung auch bei Roller nose-Extrudern einsetzbar. Zwischen der Förderschnecke und dem Spritzkopf kann weiters ein Aggregat, beispielsweise ein routierendes Mischaggregat, zwischengeschaltet werden. Es ist auch denkbar, den Scherkopf oder ein rotierendes Mischaggregat am inneren Spritzkopfmantel zu lagern und gegebenenfalls auch über diesen anzutreiben und/oder zu temperieren.

Umgekehrt ist es auch möglich, - wie bei der Scherkopfextrusion aufgezeigt -, eine Extruderschnecke oder ein rotierendes Mischaggregat nahe an den inneren Spritzkopfmantel heranzuführen, ohne daß dieser berührt wird.

## Patentansprüche

1. Spritzanordnung zum Formen von Profilen, insbesondere von Profilen mit langgestrecktem Querschnitt aus Kautschukmischungen oder Kunststoffen, mit einem Einschneckenextruder, einem Spritzkopf (10', 10'', 10''', 10^{IV}), einer Spritzleiste (7', 7'', 7''', 7^{IV}) und gegebenenfalls einem zwischen Extruder und Spritzkopf zwischengeschalteten Aggregat, wobei der Spritzkopf einen äußeren Spritzkopfmantel (5', 5'', 5''', 5^{IV}), einen inneren Spritzkopfmantel (4', 4'', 4''', 4^{IV}) und einen den Übergangsbereich zwischen innerem und äußerem Spritzkopfmantel bildenen Keil (4'a, 4''a, 4'''a, 4^{IV}a) aufweist, wobei das Spritzgut im Spritzkopf vorerst in Schlauchform vorliegt und der Keil eine Längsspaltung des schlauchförmigen Spritzgutes bewirkt, welches anschließend im Spritzkopf aufgerollt wird, dadurch gekennzeichnet, daß der innere Spritzkopfmantel (4', 4'', 4''', 4^{IV}) mit der Extruderschnecke (1', 1'') oder dem Aggregat (11) direkt verbunden ist, wobei der Extruder bzw. das Aggregat (11) und der Spritzkopf (10, 10', 10''', 10^{IV}) miteinander fluchtende und gleichdimensionierte Innenraumbereiche mit schlauchförmigem Querschnitt aufweisen.

2. Spritzanordnung nach Anspruch 1, dadurch gekennzeichnet, daß der einen schlauchartigen Querschnitt aufweisende Innenraumbereich des Spritzkopfes (10, 10'', 10^{IV}) über seine gesamte Länge eine konstante bzw. im wesentlichen konstante Innenbreite aufweist, wobei auch der aufrollende Innenraum diese Breite über seinen gesamten Bereich aufweist.

3. Spritzanordnung nach Anspruch 1, dadurch gekennzeichnet, daß der einen schlauchartigen Querschnitt aufweisende Innenraumbereich des Spritzkopfes (10''') eine sich in Richtung Spritzleiste (7''') verjüngende Kegelstumpfform aufweist, wobei in Richtung Spritzleiste (7''') die Wandstärke bzw. Breite des aufrollenden Innenraumbereiches kontinuierlich zunimmt.

4. Spritzanordnung nach einem der Ansprüche 1 bis 3, dadurch gekennzeichnet, daß die Schnecke (1', 1'') am inneren Spritzkpfmantel (4', 4'') drehbar gelagert ist.

5. Spritzanordnung nach einem der Ansprüche 1 bis 3, dadurch gekennzeichnet, daß die Schnecke (1^{IV}) mit dem inneren Spritzkopfmantel (4^{IV}) fest verbunden ist, wobei der Schneckenmantel (2^{IV}) am äußeren Spritzkopfmantel (5^{IV}) drehbar gelagert ist.

6. Spritzanordnung nach Anspruch 4 oder 5, dadurch gekennzeichnet, daß zur Temperierung der Schnecke (1', 1'', 1^{IV}) in der Schnecke (1', 1'', 1^{IV}) und im inneren Spritzkopfmantel (4', 4'', 4^{IV}) ein Kanal (6') vorgesehen ist.

7. Spritzanordnung nach einem der Ansprüche 1 bis 6, dadurch gekennzeichnet, daß die Höhe der Schneckenflügel (1'b) in Richtung Spritzkopf (10') zu, insbesondere kontinuierlich, abnimmt.

8. Spritzanordnung nach einem der Ansprüche 1 bis 7, dadurch gekennzeichnet, daß der Durchmesser des Schneckenkernes (1'c) in Richtung Spritzkopf (10'), insbesondere kontinuierlich, zunimmt.

9. Spritzanordnung nach einem der Ansprüche 1 bis 8, dadurch gekennzeichnet, daß der äußere Spritzkopfmantel (5') aus mehreren Teilen (5'b) besteht, von welchen zumindest einer entfernbar ist.

10. Spritzanordnung nach Anspruch 1, dadurch gekennzeichnet, daß das zwischen der Schnecke und dem Spritzkopf vorgesehene Aggregat mit der Schnecke mitrotiert und insbesondere ein Mischaggregat oder ein Scherkopf (11), ist.

11. Spritzanordnung nach Anspruch 10, dadurch gekennzeichnet, daß das rotierende Mischaggregat bzw. der Scherkopf (11) am inneren Spritzkopfmantel drehbar gelagert ist.

12. Spritzanordnung nach Anspruch 1, dadurch gekennzeichnet, daß das zwischen der Schnecke und dem Spritzkopf (10''') vorgesehene Aggregat ein statisches Aggregat, insbesondere ein Mischaggregat, ist.

13. Spritzanordnung nach Anspruch 10 oder 12, dadurch gekennzeichnet, daß im inneren Spritzkopfmantel (4''') ein Kanal (12) vorgesehen ist, welcher von der Stirnseite des inneren Spritzkopfmantels (4''') ausgehend nach außen führt.

14. Verwendung der Spritzanordnung nach einem der Ansprüche 1 bis 13 bei Mehrfachspritzanlagen, beispielsweise bei Doublieranlagen, insbesondere zur Herstellung von Kautschukprofilen für Fahrzeugluftreifen.

15. Mehrfachspritzanlagen nach Anspruch 14, dadurch gekennzeichnet, daß die inneren Spritzkopfmäntel (4'') der Spritzanordnungen einteilige ausgeführt sind.

16. Verwendung der Spritzanordnung nach einem der Ansprüche 1 bis 13 bei einem roller nose-Extruder.

## Claims

1. Injection moulding arrangement for shaping profiles, more especially profiles having an elongate cross-section, from rubber mixtures or plastics materials, including a single-screw extruder, an injection moulding head (10', 10'', 10''', 10^{IV}), an injection moulding bar (7', 7'', 7''', 7^{IV}) and possibly an assembly interposed between extruder and injection moulding head, the injection moulding head having an external surface (5', 5'', 5''', 5^{IV})_{,} an internal surface (4', 4'', 4''', 4^{IV}) and a wedge (4'a, 4''a, 4'''a, 4^{IV}a), which forms the transitional region between the internal surface and external surface of the injection moulding head, the material to be injection moulded being initially in tubular form in the injection moulding head, and the wedge effecting a longitudinal splitting of the tubular material to be injection moulded, which is subsequently rolled-up in the injection moulding head, characterised in that the internal surface (4', 4'', 4''', 4^{IV}) of the injection moulding head is directly connected to the extruder screw (1', 1'') or the assembly (11), the extruder or respectively the assembly (11) and the injection moulding head (10, 10', 10''', 10 ^{IV}) having internal regions of tubular cross-section, which regions are in alignment with one another and have identical dimensions.

2. Injection moulding arrangement according to claim 1, characterised in that the internal region of the injection moulding head (10, 10'', 10^{IV}), of tubular cross-section, has a constant or substantially constant internal width over its entire length, the rolling-up internal region also having this width over its entire area.

3. Injection moulding arrangement according to claim 1, characterised in that the internal region of the injection moulding head (10'''), of tubular cross-section, has a frustoconical configuration tapering in the direction towards the injection moulding bar (7'''), the wall thickness or width respectively of the rolling-up internal region continuously increasing in the direction towards the injection moulding bar (7''').

4. Injection moulding arrangement according to one of claims 1 to 3, characterised in that the screw (1', 1'') is rotatably mounted on the internal surface (4', 4'') of the injection moulding head.

5. Injection moulding arrangement according to one of claims 1 to 3, characterised in that the screw (1^{IV}) is securedly connected to the internal surface (4^{IV}) of the injection moulding head, the screw casing (2^{IV}) being rotatably mounted on the external surface (5^{IV}) of the injection moulding head.

6. Injection moulding arrangement according to claim 4 or 5, characterised in that a channel (6') is provided in the screw (1', 1'', 1^{IV}) and in the internal surface (4', 4'', 4^{IV}) in order to control the temperature of the screw (1', 1'', 1^{IV}).

7. Injection moulding arrangement according to one of claims 1 to 6, characterised in that the height of the screw blades (1'b) decreases in the direction towards the injection moulding head (10'), more especially continuously.

8. Injection moulding arrangement according to one of claims 1 to 7, characterised in that the diameter of the screw core (1'c) increases in the direction towards the injection moulding head (10'), more especially continuously.

9. Injection moulding arrangement according to one of claims 1 to 8, characterised in that the external surface (5') of the injection moulding head comprises a plurality of component parts (5'b), at least one of which is removable.

10. Injection moulding arrangement according to claim 1, characterised in that the assembly, which is provided between the screw and the injection moulding head, rotates jointly with the screw and is, more especially, a mixing assembly or a shearing head (11).

11. Injection moulding arrangement according to claim 10, characterised in that the rotary mixing assembly or respectively the shearing head (11) is rotatably mounted on the internal surface of the injection moulding head.

12. Injection moulding arrangement according to claim 1, characterised in that the assembly, which is provided between the screw and the injection moulding head (10'''), is a static assembly, more especially a mixing assembly.

13. Injection moulding arrangement according to claim 10 or 12, characterised in that a channel (12) is provided in the internal surface (4''') of the injection moulding head and extends outwardly from the end face of the internal surface (4''') of the injection moulding head.

14. Use of the injection moulding arrangement according to one of claims 1 to 13 with multiple-head injection moulding systems, for example with doubling systems, more especially for the production of rubber profiles for pneumatic vehicle tyres.

15. Multiple-head injection moulding systems according to claim 14, characterised in that the internal surfaces (4'') of the injection moulding heads of the injection moulding arrangements are of a one-piece construction.

16. Use of the injection moulding arrangement according to one of claims 1 to 13 with a roller nose extruder.

## Revendications

1. Dispositif d'injection pour la mise en forme de profils, notamment de profils à section transversale longiligne en des mélanges de caoutchoucs ou en des matières plastiques, comprenant une extrudeuse à vis sans fin unique, une tête d'injection (10', 10'', 10''', 10^{IV}), un listel d'injection (7', 7'', 7''', 7^{IV}) et, éventuellement, un groupe interposé entre l'extrudeuse et la tête d'injection la tête d'injection comportant une enveloppe extérieure (5', 5'', 5''', 5^{IV}), une enveloppe intérieure (4', 4'', 4''', 4^{IV}) et un coin (4'a, 4''a, 4'''a, 4^{IV}a) formant la zone de transition entre les enveloppes intérieure et extérieure de la tête d'injection, la matière à injecter se présentant tout d'abord sous la forme d'un boyau dans la tête d'injection, et le coin provoquant une division longitudinale de la matière à injecter en forme de boyau laquelle est ensuite enroulée dans la tête d'injection, caractérisé par le fait que l'enveloppe intérieure (4', 4'', 4''', 4^{IV}) de la tête d'injection est directement reliée à la vis sans fin (1', 1'') de l'extrudeuse ou au groupe (11) l'extrudeuse ou le groupe (11) et la tête d'injection (10, 10', 10''', 10^{IV}) étant munis, respectivement, de zones d'espace interne mutuellement elignées de même dimensionnement et présentant une section transversale en forme de boyau.

2. Dispositif d'injection selon la revendication 1, caractérisé par le fait que la zone d'espace interne de la tête d'injection (10, 10'', 10^{IV}) qui est munie d'une section transversale du type boyau présente sur toute sa longueur, une largeur intérieure respectivement constante ou pour l'essentiel constante, l'espace interne provoquant l'enroulement présentant, lui aussi, cette largeur sur toute sa région.

3. Dispositif d'injection selon la revendication 1, caractérisé par le fait que la zone d'espace interne de la tête d'injection (10''') qui est munie d'une section transversale du type boyau présente une configuration tronconique se rétrécissant en direction du listel d'injection (7'''), l'épaisseur de paroi ou la largeur de la zone d'espace interne provoquant l'enroulement croissant continûment en direction du listel d'injection (7''').

4. Dispositif d'injection selon l'une des revendications 1 à 3, caractérisé par le fait que la vis sans fin (1', 1'') est montée à rotation sur l'enveloppe intérieure (4', 4'') de la tête d'injection.

5. Dispositif d'injection selon l'une des revendications 1 à 3, caractérisé par le fait que la vis sans fin (1^{IV}) est reliée rigidement à l'enveloppe intérieure (4^{IV}) de la tête d'injection, l'enveloppe (2^{IV}) de la vis sans fin étant montée à rotation sur l'enveloppe extérieure (5^{IV}) de la tête d'injection.

6. Dispositif d'injection selon la revendication 4 ou 5, caractérisé par le fait qu'un canal (6') est prévu, dans la vis sans fin (1', 1'', 1^{IV}) et dans l'enveloppe intérieure (4', 4'', 4^{IV}) de la tête d'injection, en vue d'équilibrer la température de la vis sans fin (1', 1'', 1^{IV}).

7. Dispositif d'injection selon l'une des revendications 1 à 6, caractérisé par le fait que la hauteur des pales (1'b) de la vis sans fin décroît, en particulier continûment, en direction de la tête d'injection (10').

8. Dispositif d'injection selon l'une des revendications 1 à 7, caractérisé par le fait que le diamètre de l'âme (1'c) de la vis sans fin croît, en particulier continûment, en direction de la tête d'injection (10').

9. Dispositif d'injection selon l'une des revendications 1 à 8, caractérisé par le fait que l'enveloppe extérieure (5') de la tête d'injection se compose de plusieurs parties (5'b) dont au moins l'une peut être déposée.

10. Dispositif d'injection selon la revendication 1, caractérisé par le fait que le groupe, prévu entre la vis sans fin et la tête d'injection, tourne conjointement à la vis sans fin et se présente, notamment, comme un groupe mélangeur ou comme une tête de cisaillement (11).

11. Dispositif d'injection selon la revendication 10, caractérisé par le fait que le groupe mélangeur rotatif ou la tête de cisaillement (11) est respectivement monté(e) à rotation sur l'enveloppe intérieure de la tête d'injection.

12. Dispositif d'injection selon la revendication 1, caractérisé par le fait que le groupe, prévu entre la vis sans fin et la tête d'injection (10'''), est un groupe statique et notamment un groupe mélangeur.

13. Dispositif d'injection selon la revendication 10 ou 12, caractérisé par le fait qu'un canal (12), prévu dans l'enveloppe intérieure (4''') de la tête d'injection, gagne l'extérieur à partir de la face frontele de l'enveloppe intérieure (4''') de la tête d'injection.

14. Utilisation du dispositif d'injection selon l'une des revendications 1 à 13, dans des installations d'injection multiples, par exemple dans des installations duplex, en particulier pour la fabrication de profilés en caoutchouc destinés à des pneumatiques de véhicules.

15. Installations d'injection multiples selon la revendication 14, caractérisées par le fait que les enveloppes intérieures (4'') des têtes d'injection des dispositifs d'injection sont réalisées d'un seul tenant.

16. Utilisation du dispositif d'injection selon l'une des revendications 1 à 13, dans une extrudeuse à bec cylindrique.
